# FASCICULE DE BREVET EUROPEEN

(11) **EP 3 172 060 B1**
(45) Date de publication et mention de la délivrance du brevet: **23.05.2018**
(21) Numéro de dépôt: 15734212.2
(22) Date de dépôt: 09.07.2015
(51) Int. Cl.: B60C 1/00, C08L 7/00

(54) **PNEUMATIQUE MUNI D'UNE BANDE DE ROULEMENT COMPRENANT UNE COMPOSITION DE CAOUTCHOUC COMPRENANT UNE RESINE THERMOPLASTIQUE DE POLYMETHACRYLATE DE METHYLE**
REIFEN MIT LAUFFLÄCHE ENTHALTEND EINE LATEXZUSAMMENSETZUNG ENTHALTEND EIN THERMOPLASTISCHES POLYMETHYLMETHACRYLAT-HARZ
TIRE COMPRISING A TREAD COMPRISING A LATEX COMPOSITION COMPRISING A THERMOPLASTIC RESIN OF POLYMETHYLMETHACRYLATE

(30) Priorité: 24.07.2014 FR 1457133
(43) Date de publication de la demande: 31.05.2017
(73) Titulaire: Compagnie Générale des Etablissements Michelin, 63000 Clermont-Ferrand (FR)
(72) Inventeur: VASSEUR, Didier, F-63040 Clermont-Ferrand Cedex 9 (FR); LEMERLE, Frédéric, F-63040 Clermont-Ferrand Cedex 9 (FR)
(74) Mandataire: Wroblewski, Nicolas Paul André
(86) Numéro de dépôt international: PCT/EP2015/065746
(87) Numéro de publication internationale: WO 2016/012256

(56) Documents cités:
- EP-A1- 2 457 720
- EP-A1- 2 703 186

## Description

L'invention est relative aux compositions, notamment pour pneumatiques et plus particulièrement aux compositions pour bande de roulement de pneumatique.

Une bande de roulement de pneumatique doit obéir de manière connue à un grand nombre d'exigences techniques, souvent antinomiques, parmi lesquelles une faible résistance au roulement, un bon comportement routier, ainsi qu'une adhérence élevée sur route sèche comme mouillée.

Dans ce cadre, de nombreuses solutions ont déjà été proposées telle que par exemple l'utilisation d'un caoutchouc naturel greffé avec du polyméthacrylate de méthyle, pour améliorer l'adhérence sur sol humide et le comportement routier, comme par exemple, les compositions décrites dans le document EP351054.

Néanmoins, les manufacturiers cherchent toujours des solutions pour améliorer en même temps toutes les performances des compositions pour pneumatique et notamment, en plus de l'adhérence sur sol humide et du comportement routier, la résistance au roulement.

A présent, les Demanderesses ont montré que des compositions particulières comprenant une résine thermoplastique de polyméthacrylate de méthyle particulière, sans que ce polyméthacrylate de méthyle soit greffé sur un élastomère, permettaient d'avoir un compromis amélioré entre de nombreuses performances recherchées pour les compositions de pneumatique, c'est-à-dire la résistance au roulement, l'adhérence sur sol humide, et le comportement routier.

L'invention concerne donc un pneumatique muni d'une bande de roulement comprenant une composition de caoutchouc à base d'au moins un élastomère diénique, une charge renforçante, un système de réticulation et une résine thermoplastique de polyméthacrylate de méthyle, ladite résine thermoplastique de polyméthacrylate de méthyle présentant un point Vicat mesuré selon la norme ISO 306 : 2013 B50 compris dans un domaine allant de 60°C à 100°C.

Préférentiellement, l'invention concerne un pneumatique tel que défini ci-dessus dans lequel ledit élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères. De préférence, ledit élastomère diénique est choisi dans le groupe constitué par les polybutadiènes, les copolymères de butadiène et de styrène, le caoutchouc naturel et les mélanges de ces élastomères.

Préférentiellement également, l'invention concerne un pneumatique tel que défini ci-dessus dans lequel la charge renforçante est choisie dans le groupe constitué par les silices, les noirs de carbone et les mélanges de ces derniers. De préférence, le taux de charge renforçante est compris dans un domaine allant de 10 à 200 pce, de préférence de 10 à 150 pce.

Selon un premier mode de réalisation préférentiel, l'invention concerne un pneumatique tel que défini ci-dessus dans lequel la charge renforçante majoritaire est du noir de carbone. De préférence, le taux de noir de carbone est compris dans un domaine allant de 10 à 90 pce, de préférence de 10 à 70 pce.

Selon un second mode de réalisation préférentiel, alternatif au premier mode de réalisation ci-dessus, l'invention concerne un pneumatique tel que défini ci-dessus dans lequel la charge renforçante majoritaire est de la silice. De préférence, le taux de silice est compris dans un domaine allant de 50 à 140 pce, de préférence de 70 à 120 pce.

De préférence, l'invention concerne un pneumatique tel que défini ci-dessus dans lequel le taux de résine thermoplastique de polyméthacrylate de méthyle est compris dans un domaine allant de 1 à 40 pce, de préférence de 2 à 35 pce. Plus préférentiellement, le taux de résine thermoplastique de polyméthacrylate de méthyle est compris dans un domaine allant de 3 à 30 pce, de préférence de 5 à 15 pce.

De préférence également, l'invention concerne un pneumatique tel que défini ci-dessus dans lequel le point de ramollissement Vicat de la résine thermoplastique de polyméthacrylate de méthyle est compris dans un domaine allant de 65°C à 95°C, de préférence de 70°C à 90°C.

Préférentiellement, l'invention concerne un pneumatique tel que défini ci-dessus dans lequel la composition de bande de roulement comprend en outre un plastifiant. De préférence le plastifiant est choisi parmi les huiles, les résines hydrocarbonées et les mélanges de ces dernières. Préférentiellement, le taux de plastifiant est compris dans un domaine allant de 2 à 80 pce, de préférence de 5 à 60 pce.

Alternativement et préférentiellement également, l'invention concerne un pneumatique tel que défini ci-dessus dans lequel la composition de bande de roulement ne comprend pas d'autre agent plastifiant que la résine de polyméthacrylate de méthyle.

Préférentiellement, le pneumatique selon l'invention sera choisi parmi les pneumatiques destinés à équiper un véhicule à deux roues, un véhicule de tourisme, ou encore un véhicule dit « poids lourd » (c'est-à-dire métro, bus, véhicules hors-la-route, engins de transport routier tels que camions, tracteurs, remorques), ou encore des avions, des engins de génie civil, agraire, ou de manutention.

### I- Constituants de la composition de bande de roulement du pneumatique de l'invention

Le pneumatique selon l'invention est muni d'une bande de roulement comprenant une composition de caoutchouc à base d'au moins un élastomère diénique, une charge renforçante, un système de réticulation et une résine thermoplastique de polyméthacrylate de méthyle, ladite résine thermoplastique de polyméthacrylate de méthyle présentant un point Vicat mesuré selon la norme ISO 306 : 2013 B50 compris dans un domaine allant de 60°C à 100°C.

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en oeuvre pour l'invention peuvent être différentes à l'état non réticulé et à l'état réticulé.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères.

Au contraire, un composé « minoritaire » est un composé qui ne représente pas la fraction massique la plus grande parmi les composés du même type.

### I-1 Elastomère diénique

Les compositions peuvent contenir un seul élastomère diénique ou un mélange de plusieurs élastomères diéniques.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

Les élastomères diéniques peuvent être classés dans deux catégories : "essentiellement insaturés" ou "essentiellement saturés". On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles); c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être utilisé dans les compositions selon l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène;
(d) un copolymère d'isobutène et d'isoprène (caoutchouc butyle), ainsi que les versions halogénées, en particulier chlorées ou bromées, de ce type de copolymère.

Bien qu'elle s'applique à tout type d'élastomère diénique, l'homme du métier du pneumatique comprendra que la présente invention est de préférence mise en oeuvre avec des élastomères diéniques essentiellement insaturés, en particulier du type (a) ou (b) ci-dessus.

A titre de diènes conjugués conviennent notamment le butadiène-1,3, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, l'aryl-1,3-butadiène, le 1,3-pentadiène, le 2,4-hexadiène. A titre de composés vinylaromatiques conviennent par exemple le styrène, l'ortho-, méta-, para-méthylstyrène, le mélange commercial "vinyle-toluène", le para-tertiobutylstyrène, les méthoxystyrènes, les chlorostyrènes, le vinylmésitylène, le divinylbenzène, le vinylnaphtalène.

Les copolymères peuvent contenir entre 99% et 20% en poids d'unités diéniques et entre 1% et 80% en poids d'unités vinylaromatiques. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à du noir de carbone, on peut citer par exemple des groupes fonctionnels comprenant une liaison C-Sn ou des groupes fonctionnels aminés tels que aminobenzophénone par exemple ; pour un couplage à une charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Ces élastomères fonctionnalisés peuvent être utilisés en coupage entre eux ou avec des élastomères non fonctionnalisés. Par exemple, on peut utiliser un élastomère fonctionnalisé silanol ou polysiloxane ayant une extrémité silanol, en mélange avec un élastomère couplés et/ou étoilés à l'étain (décrit dans WO 11/042507), ce dernier représentant un taux compris de 5 à 50%, par exemple de 25 à 50%.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et -70°C et plus particulièrement entre -10°C et -60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de -40°C à -80°C, les copolymères isoprène-styrène et notamment ceux ayant une teneur en styrène comprise entre 5% et 50% en poids et une Tg comprise entre -5°C et -60°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -20°C et -70°C.

En résumé, l'élastomère diénique de la composition est choisi préférentiellement dans le groupe des élastomères diéniques fortement insaturés constitué par les polybutadiènes (en abrégé "BR"), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés.

Plus préférentiellement, l'élastomère diénique de la composition est choisi préférentiellement dans le groupe des élastomères diéniques fortement insaturés constitué par les polybutadiènes (BR), les copolymères de butadiène-styrène (SBR), le caoutchouc naturel (NR), et les mélanges de ces élastomères.

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon un autre mode particulier de réalisation, l'élastomère diénique est un coupage (mélange) SBR/BR.

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre -10°C et -55°C ; un tel SBR peut être avantageusement utilisé en mélange avec un BR possédant de préférence plus de 90% (% molaire) de liaisons cis-1,4.

Selon un mode préférentiel de réalisation de l'invention, la composition de caoutchouc comprend un coupage d'un (un ou plusieurs) élastomère diénique dit "à haute Tg" présentant une Tg comprise entre -70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70%; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Alternativement et selon un autre mode de réalisation préféré, la composition de caoutchouc comprend majoritairement du caoutchouc naturel, et plus préférentiellement du caoutchouc naturel comme seul élastomère.

### I-2 Charge renforçante

La composition selon l'invention comprend une charge renforçante. On peut utiliser tout type de charge renforçante connue pour ses capacités à renforcer une composition de caoutchouc utilisable pour la fabrication de pneumatiques, par exemple une charge organique tel que du noir de carbone, une charge inorganique renforçante telle que de la silice, de l'alumine, ou encore un coupage de ces deux types de charge.

Comme noirs de carbone conviennent tous les noirs de carbone, notamment les noirs dits de grade pneumatique. Parmi ces derniers, on citera plus particulièrement les noirs de carbone renforçants des séries 100, 200 ou 300 (grades ASTM), comme par exemple les noirs N115, N134, N234, N326, N330, N339, N347, N375, ou encore, selon les applications visées, les noirs de séries plus élevées (par exemple N660, N683, N772). Les noirs de carbone pourraient être par exemple déjà incorporés à un élastomère isoprénique sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

La composition peut contenir un type de silice ou un coupage de plusieurs silices. La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g. A titres de silices précipitées hautement dispersibles (dites "HDS"), on citera par exemple les silices « Ultrasil 7000 » et « Ultrasil 7005 » de la société Degussa, les silices « Zeosil » 1165MP, 1135MP et 1115MP de la société Rhodia, la silice « Hi-Sil EZ150G » de la société PPG, les silices « Zeopol » 8715, 8745 et 8755 de la Société Huber, des silices précipitées traitées telles que par exemple les silices "dopées" à l'aluminium décrites dans la demande EP-A-0735088 ou les silices à haute surface spécifique telles que décrites dans la demande WO 03/16837.

La silice a de préférence une surface BET comprise entre 45 et 400 m2/g, plus préférentiellement comprise entre 60 et 300 m2/g.

Ces compositions peuvent optionnellement également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des acides gras, des polyéthers, des amines primaires, secondaires ou tertiaires, des polyorganosiloxanes hydroxylés ou hydrolysables.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Lorsque la composition comprend une charge inorganique telle que la silice, la teneur en agent de couplage est préférentiellement comprise entre 2 et 15 pce, plus préférentiellement entre 3 et 13 et encore plus préférentiellement entre 5 et 11 pce.

L'homme du métier comprendra qu'à titre de charge équivalente de la silice décrite dans le présent paragraphe, pourrait être utilisée une charge renforçante d'une autre nature, notamment organique, dès lors que cette charge renforçante serait recouverte d'une couche de silice, ou bien comporterait à sa surface des sites fonctionnels, notamment hydroxyles, nécessitant l'utilisation d'un agent de couplage pour établir la liaison entre la charge et l'élastomère.

L'état physique sous lequel se présente la charge renforçante est indifférent, que ce soit sous forme de poudre, de microperles, de granulés, de billes ou toute autre forme densifiée appropriée.

La fraction volumique de charge renforçante dans la composition de caoutchouc est définie comme étant le rapport du volume de la charge renforçante sur le volume de l'ensemble des constituants de la composition, étant entendu que le volume de l'ensemble des constituants est calculé en additionnant le volume de chacun des constituants de la composition. La fraction volumique de charge renforçante dans une composition est donc définie comme le rapport du volume de la charge renforçante sur la somme des volumes de chacun des constituants de la composition, typiquement, cette fraction volumique est comprise entre 10 % et 30 %, préférentiellement entre 15 % et 25%. D'une manière préférentielle équivalente, le taux de charge renforçante total (noir de carbone et/ou charge inorganique renforçante telle que silice) est de 10 à 200 pce, plus préférentiellement de 10 à 150 pce et de manière très préférentielle, de 15 à 135 pce. En dessous de 10 pce de charge, la composition pourrait être moins performante en résistance à l'usure tandis qu'au-dessus de 200 pce de charge, la composition pourrait être moins performante en résistance au roulement.

Selon un mode de réalisation, la composition comprend du noir de carbone comme charge majoritaire, en coupage éventuel avec de la silice, comme charge minoritaire. Dans ce cas, le taux de noir est préférentiellement compris dans un domaine allant de 10 à 90 pce, de préférence de 10 à 70 pce. Le taux de silice est préférentiellement compris dans un domaine allant de 0 à 45 pce, de préférence de 0 à 35 pce. Dans ce mode de réalisation, le taux de silice est préférentiellement de 0 pce ou inférieur à 10 pce.

Selon un mode de réalisation, la composition comprend de la silice comme charge majoritaire, en coupage éventuel avec du noir de carbone, comme charge minoritaire. Dans ce cas, le taux de silice est préférentiellement compris dans un domaine allant de 50 à 140 pce, de préférence de 70 à 120 pce. Le taux de noir est préférentiellement compris dans un domaine allant de 0 à 50 pce, de préférence de 1 à 30 pce. Dans ce mode de réalisation, le taux de noir est préférentiellement compris dans un domaine allant de 1 à 5 pce et préférentiellement inférieur ou égal à 4 pce.

### I-3 Système de réticulation

Le système de réticulation peut être composé de tout agent de réticulation apte à réticuler ou faire réticuler l'élastomère diénique de la composition. Préférentiellement le système de réticulation comprend du soufre comme agent réticulant, il s'agit donc d'un système de vulcanisation.

Le système de vulcanisation proprement dit est à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine).

Le soufre est utilisé à un taux préférentiel compris entre 0,5 et 10 pce, plus préférentiellement compris entre 0,5 et 5 pce, en particulier entre 0,5 et 3 pce lorsque la composition de l'invention est destinée, selon un mode préférentiel de l'invention, à constituer une bande de roulement de pneumatique.

Le système de vulcanisation de la composition selon l'invention peut également comprendre un ou plusieurs accélérateurs additionnels, par exemple les composés de la famille des thiurames, les dérivés dithiocarbamates de zinc, les sulfénamides, les guanidines ou les thiophosphates. On peut utiliser en particulier tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-tert-butyl-2-benzothiazyle sulfénamide (en abrégé "TBBS"), N-tert-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### I-4 Résine thermoplastique de PMMA

La composition de caoutchouc de la bande de roulement du pneumatique selon l'invention comprend une résine (c'est-à-dire une ou plusieurs résines) de polyméthacrylate de méthyle (PMMA, ou polyméthylméthacrylate).

La résine thermoplastique de PMMA est un polymère essentiellement (c'est-à-dire à plus de 80%, préférentiellement à plus de 90% et préférentiellement à plus de 95%, par exemple à 100% constitué à partir de monomères d'acrylate de méthyle polymérisés.

Pour les besoins de l'invention, la résine thermoplastique de PMMA présente un point de ramollissement Vicat, mesuré selon la norme ISO 306 : 2013 B50 compris dans un domaine allant de 60°C à 100°C. En dessous de 60°C, la résine risque de ne plus être suffisamment rigide, tandis qu'au-dessus de 100°C, la résine thermoplastique de PMMA induit une trop grande rigidité pouvant diminuer la performance en adhérence et augmenter l'hystérèse. Pour ces raisons, on préfère que le point de ramollissement Vicat de la résine de PMMA soit compris dans un domaine allant de 65°C à 95°C et de préférence dans un domaine de 70°C à 90°C.

Les résines de PMMA peuvent être préparées de manière connue de l'homme du métier par polymérisation radicalaire de méthacrylate de méthyle, et sont également disponible dans le commerce, par exemple auprès de la société Asahi Kasei, sous la dénomination commerciale « Delpet SR 6500 », avec un point de ramollissement Vicat de 78°C.

### I-5 Autres additifs possibles

Les compositions de caoutchouc de la bande de roulement du pneumatique conforme à l'invention comportent optionnellement également tout ou partie des additifs usuels habituellement utilisés dans les compositions d'élastomères destinées notamment à la fabrication de bandes de roulement, comme par exemple des pigments, des agents de protection tels que cires anti-ozone, anti-ozonants chimiques, anti-oxydants, des agents plastifiants autres que ceux précédemment décrits, des agents anti-fatigue, des résines renforçantes, des accepteurs (par exemple résine phénolique novolaque) ou des donneurs de méthylène (par exemple HMT ou H3M).

Les compositions de caoutchouc de la bande de roulement du pneumatique conforme à l'invention comportent optionnellement également un plastifiant, autre que la résine de PMMA décrite précédemment, tel qu'une combinaison de plastifiants ou système plastifiant. Ce plastifiant ou combinaison de plastifiants peut être composée d'un ou plusieurs agents plastifiants connus de l'homme de l'art, et notamment choisi parmi les huiles plastifiantes, les résines plastifiantes et les mélanges de ces dernières.

Toute huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles d'extension choisies dans le groupe constitué par les huiles naphténiques (à basse ou haute viscosité, notamment hydrogénées ou non), les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

Toute résine hydrocarbonée thermoplastique, connue pour sa capacité à plastifier une composition de caoutchouc est également utilisable. Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

De préférence, le taux de plastifiant dans les compositions utiles à l'invention est compris dans un domaine allant de 2 à 80 pce, de préférence de 5 à 60 pce.

Alternativement, selon un autre mode de réalisation préférentiel, la composition de bande de roulement selon l'invention ne comprend pas de plastifiant autre que la résine de PMMA décrite précédemment.

Bien entendu, les compositions utiles aux besoins de l'invention peuvent être utilisées seules ou en coupage (i.e., en mélange) avec toute autre composition de caoutchouc utilisable pour la fabrication de pneumatiques.

### II- Préparation des pneumatiques de l'invention

La composition de la bande de roulement du pneumatique selon l'invention est fabriquée dans des mélangeurs appropriés, en utilisant deux phases de préparation successives bien connues de l'homme du métier: une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une deuxième phase de travail mécanique (parfois qualifiée de phase "productive") à plus basse température, typiquement inférieure à 110°C, par exemple entre 60°C et 100°C, phase de finition au cours de laquelle est incorporé le système de réticulation ou vulcanisation; de telles phases ont été décrites par exemple dans les demandes EP-A-0501227, EP-A-0735088, EP-A-0810258, WO00/05300 ou WO00/05301.

La première phase (non-productive) est conduite préférentiellement en plusieurs étapes thermomécaniques. Au cours d'une première étape on introduit, dans un mélangeur approprié tel qu'un mélangeur interne usuel, les élastomères, les charges renforçantes, la résine thermoplastique de PMMA (et éventuellement les autres ingrédients à l'exception du système de réticulation), à une température comprise entre 20°C et 100°C et, de préférence, entre 25°C et 100°C. Après quelques minutes, préférentiellement de 0,5 à 2 min et une montée de la température à 90°C à 100°C, les autres ingrédients (c'est-à-dire, ceux qui restent si tous n'ont pas été mis au départ) sont ajoutés en une fois ou par parties, à l'exception du système de vulcanisation durant un mélangeage allant de 20 secondes à quelques minutes. La durée totale du malaxage, dans cette phase non-productive, est de préférence comprise entre 2 et 10 minutes à une température inférieure ou égale à 180°C, et préférentiellement inférieure ou égale à 170°C.

Après refroidissement du mélange ainsi obtenu, on incorpore alors le système de réticulation à basse température (typiquement inférieure à 100°C), généralement dans un mélangeur externe tel qu'un mélangeur à cylindres; le tout est alors mélangé (phase productive) pendant quelques minutes, par exemple entre 5 et 15 min.

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication d'une bande de roulement. Cette bande de roulement produite est ensuite utilisée pour la fabrication d'un pneumatique selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de vulcanisation de la composition considérée ou encore de la taille du pneumatique.

Les exemples qui suivent illustrent l'invention sans toutefois la limiter.

### III- Exemples de réalisation de l'invention

### 111-1 Préparation des exemples

Dans les exemples qui suivent les compositions caoutchouteuses ont été réalisées comme décrit précédemment.

### III-2 Caractérisation des exemples

Dans les exemples, les compositions de caoutchouc sont caractérisées avant et/ou après cuisson comme indiqué ci-après.

### - Propriétés dynamiques (après cuisson):

Les propriétés dynamiques G* et tan(δ)max sont mesurées sur un viscoanalyseur (Metravib V A4000), selon la norme ASTM D 5992 - 96. On enregistre la réponse d'un échantillon de composition vulcanisée (éprouvette cylindrique de 4 mm d'épaisseur et de 400 mm2 de section), soumis à une sollicitation sinusoïdale en cisaillement simple alterné, à la fréquence de 10Hz, dans les conditions variables de température, notamment à 60°C, selon la norme ASTM D 1349 - 99. On effectue un balayage en amplitude de déformation crête à crête de 0,1 à 50% (cycle aller), puis de 50% à 1 % (cycle retour). Les résultats exploités sont le module complexe de cisaillement dynamique (G*) et le facteur de perte (tan δ). Pour le cycle retour, on indique la valeur maximale de tan δ observée (tan(δ)max), ainsi que l'écart de module complexe (AG*) entre les valeurs à 0,1% et à 50% de déformation (effet Payne). Pour la de tan(δ) max à 60°C, plus la valeur est basse, plus la composition aura une hystérèse faible et donc une résistance au roulement faible.

### - Méthode de mesure du coefficient de frottement (µ)

Les mesures de coefficient de frottement dynamique ont été réalisées selon une méthode identique à celle décrite par L. Busse, A. Le Gal, et M. Küppel (Modelling of Dry and Wet Friction of Silica Filled Elastomers on Self-Affine Road Surfaces, Elastomere Friction, 2010, 51, p. 8), sur un tribomètre « BRUCKER UMT3 ». Les éprouvettes sont réalisées par moulage, puis réticulation d'un support caoutchouteux en forme d'anneau d'un diamètre externe de 7 cm, d'un diamètre interne de 6 cm et d'une épaisseur de 0,7 cm. Après fermeture du moule, celui-ci est placé dans une presse à plateaux chauffants à la température (typiquement 150°C), et pendant le temps nécessaires à la réticulation du matériau (typiquement plusieurs dizaines de minutes), à une pression de 16 bars. Le sol utilisé pour réaliser ces mesures est une carotte prélevée sur un sol routier réel en béton bitumineux de type BBTM (norme NF P 98-137). Pour éviter les phénomènes de démouillage et l'apparition de forces d'adhésion parasites entre le sol et le matériau, le système sol+éprouvette est immergé dans une solution aqueuse à 5% d'un agent tensio-actif (Sinnozon - numéro CAS : 25155-30-0). La température de la solution aqueuse est régulée à l'aide d'un bain thermostatique. L'éprouvette est soumise à un mouvement de glissement en translation parallèlement au plan du sol. La vitesse de glissement Vg est fixée à 0,9 m/sec. La contrainte normale appliquée n est de 300 kPa. Ces conditions sont décrites ci-après par « conditions de sol mouillé ». On mesure en continu la contrainte tangentielle t opposée au mouvement de l'éprouvette sur le sol. Le rapport entre la contrainte tangentielle t et la contrainte normale n donne le coefficient de frottement dynamique µ. Les valeurs indiquées dans les exemples sont les valeurs de coefficient de frottement dynamique mesurées pour une température de solution aqueuse de 20°C, obtenues en régime permanent après stabilisation de la valeur de la contrainte tangentielle t. Une valeur supérieure à celle de la référence, arbitrairement fixée à 100, indique un résultat amélioré.

### III-3 Exemples

Les compositions sont fabriquées avec une introduction de l'ensemble des constituants sur un mélangeur interne, à l'exception du système de vulcanisation. Les agents de vulcanisation (soufre et accélérateur) sont introduits sur un mélangeur externe à basse température (les cylindres constitutifs du mélangeur étant à environ 30°C).

Les exemples présentés dans le tableau 1 ont pour objet de comparer les différentes propriétés de caoutchouterie de compositions témoins (T1 à T7) aux compositions C1 à C4 conformes à l'invention. Les résultats de mesure des propriétés mesurées avant et après cuisson sont présentés au tableau 2.

**Tableau 1**

| Composition | T1 | T2 | C1 | T3 | T4 | C2 | T5 | C3 | T6 | T7 | C4 |
|---|---|---|---|---|---|---|---|---|---|---|---|
| NR (1) | 100 | 100 | 100 | 100 | 100 | 100 | 100 | 100 | 100 | 100 | 100 |
| dont NR provenant d'un NR greffé PMMA (2) | - | 12 | - | 23 | - | - | 47 | - | 100 | - | - |
| Taux correspondant de PMMA | - | 5 | - | 10 | - | - | 20 | - | 30 | - | - |
| PMMA 1 (3) | - | - | - | - | 10 | - | - | - | - | 30 | - |
| PMMA 2 (4) | - | - | 5 | - | - | 10 | - | 20 | - | - | 30 |
| Noir de carbone (5) | 54 | 54 | 54 | 54 | 54 | 54 | 54 | 54 | 54 | 54 | 54 |
| ZnO (6) | 2,4 | 2,4 | 2,4 | 2,4 | 2,4 | 2,4 | 2,4 | 2,4 | 2,4 | 2,4 | 2,4 |
| Acide Stéarique (7) | 2 | 2 | 2 | 2 | 2 | 2 | 2 | 2 | 2 | 2 | 2 |
| Soufre | 1,1 | 1,1 | 1,1 | 1,1 | 1,1 | 1,1 | 1,1 | 1,1 | 1,1 | 1,1 | 1,1 |
| Accélérateur (8) | 1,1 | 1,1 | 1,1 | 1,1 | 1,1 | 1,1 | 1,1 | 1,1 | 1,1 | 1,1 | 1,1 |
| Antioxydant (9) | 2 | 2 | 2 | 2 | 2 | 2 | 2 | 2 | 2 | 2 | 2 |

| | | | | | | | | | | | |
|---|---|---|---|---|---|---|---|---|---|---|---|
| (1) Caoutchouc naturel (2) Caoutchouc naturel greffé PMMA à 30% de PMMA « Megapoly 30 » de la société Akrochem (3) Polyméthacrylate de méthyle « Delpet 80NB » de la société Asahi Kasei Point Vicat Pv= 104°C (4) Polyméthacrylate de méthyle « Delpet SR 6500 » de la société Asahi Kasei Point Vicat Pv = 78°C (5) Grade ASTM N234 (société Cabot) (6) Oxyde de zinc de grade industriel - société Umicore (7) Stéarine « Pristerene 4931 » de la société Uniqema (8) N-cyclohexyl-2-benzothiazol-sulfénamide (« Santocure CBS » de la société Flexsys) (9) N-(1,3-diméthylbutyl)-N'-phényl-p-phénylènediamine (Santoflex 6-PPD) de la société Flexsys et Cire anti-ozone | | | | | | | | | | | |

**Tableau 2**

| | T1 | T2 | C1 | T3 | T4 | C2 | T5 | C3 | T6 | T7 | C4 |
|---|---|---|---|---|---|---|---|---|---|---|---|
| G*60°C | 1,5 | 1,6 | 1,5 | 1,9 | 4,7 | 1,6 | 2,7 | 2 | 4,4 | 8 | 2,7 |
| tan(delta)ₘₐₓ 60°C | 0,24 | 0,27 | 0,25 | 0,28 | 0,31 | 0,26 | 0,29 | 0,27 | 0,30 | 0,43 | 0,29 |
| µ à 20°C | 0,40 | 0,42 | 0,43 | 0,45 | 0,40 | 0,46 | 0,44 | 0,45 | 0,43 | 0,35 | 0,44 |
| Performance adhérence base 100 | 100 | 105 | 107 | 112 | 100 | 115 | 110 | 112 | 107 | 87 | 110 |

Par rapport aux compositions témoins, on note que les compositions conformes à l'invention présente le meilleur compromis entre une performance adhérence très améliorée et une stabilité de l'hystérèse et de la rigidité. Ces résultats montrent que les compositions de l'invention permettent de bonnes performances sur les aspects essentiels que sont l'adhérence, la résistance au roulement et le comportement routier. Aucune des compositions témoin ne permet un aussi bon compromis de toutes ces performances à la fois. On note également que l'utilisation d'une résine de PMMA présentant un point Vicat supérieur à 100°C ne permet pas d'améliorer l'adhérence des compositions, et qui plus est, augmente la rigidité dans une proportion trop importante pour une utilisation en bande de roulement de pneumatique. On note également que l'élastomère greffé PMMA ne permet pas un aussi bon compromis que l'invention, notamment entre l'adhérence et l'hystérèse de la composition.

Une deuxième série d'exemples est présentée dans le tableau 3, dont l'objet est de comparer les différentes propriétés de caoutchouterie de compositions témoins (T1 et T8 à T10) aux compositions C5 et C6 conformes à l'invention. Les résultats de mesure des propriétés mesurées sont présentés au tableau 4.

**Tableau 3**

| Composition | T1 | T8 | T9 | C5 | T10 | C6 |
|---|---|---|---|---|---|---|
| NR (1) | 100 | 100 | 100 | 100 | 100 | 100 |
| dont NR provenant d'un NR greffé PMMA (2) | - | - | 100 | - | 100 | - |
| Taux correspondant de PMMA | - | - | 30 | - | 30 | - |
| PMMA 2 (3) | - | - | - | 30 | - | 30 |
| Noir de carbone (4) | 54 | 68 | 14 | 20 | 54 | 54 |
| Huile (5) | - | - | - | - | 53 | 48 |
| ZnO (6) | 2,4 | 2,4 | 2,4 | 2,4 | 2,4 | 2,4 |
| Acide Stéarique (7) | 2 | 2 | 2 | 2 | 2 | 2 |
| Soufre | 1,1 | 1,1 | 1,1 | 1,1 | 1,1 | 1,1 |
| Accélérateur (8) | 1,1 | 1,1 | 1,1 | 1,1 | 1,1 | 1,1 |
| Antioxydant (9) | 2 | 2 | 2 | 2 | 2 | 2 |

| | | | | | | |
|---|---|---|---|---|---|---|
| (1) Caoutchouc naturel (2) Caoutchouc naturel greffé PMMA à 30% de PMMA « Megapoly 30 » de la société Akrochem (3) Polyméthacrylate de méthyle « Delpet SR 6500 » de la société Asahi Kasei Point Vicat Pv = 78°C (4) Grade ASTM N234 (société Cabot) (5) Huile MES « Catenex SNR » de la société Shell (6) Oxyde de zinc de grade industriel - société Umicore (7) Stéarine « Pristerene 4931 » de la société Uniqema (8) N-cyclohexyl-2-benzothiazol-sulfénamide (« Santocure CBS » de la société Flexsys) (9) N-(1,3-diméthylbutyl)-N'-phényl-p-phénylènediamine (Santoflex 6-PPD) de la société Flexsys et Cire anti-ozone | | | | | | |

**Tableau 4**

| | T1 | T8 | T9 | C5 | T10 | C6 |
|---|---|---|---|---|---|---|
| G*60°C | 1,5 | 2,1 | 2,1 | 2 | 1,5 | 1,5 |
| tan(delta)ₘₐₓ 60°C | 0,24 | 0,30 | 0,16 | 0,14 | 0,35 | 0,33 |
| µ à 20°C | 0,40 | 0,38 | 0,49 | 0,51 | 0,48 | 0,50 |
| Performance adhérence base 100 | 100 | 95 | 122 | 127 | 120 | 125 |

Par rapport aux compositions témoins, on note que les compositions conformes à l'invention permettent, toujours avec d'excellentes performances d'adhérence et de rigidité, de baisser sensiblement l'hystérèse des compositions en abaissant le taux de charge renforçante, sans pénaliser les autres propriétés. Les compositions conformes à l'invention présentent le meilleur compromis entre une performance adhérence très améliorée et une stabilité ou une amélioration de l'hystérèse et de la rigidité. Ces résultats montrent que les compositions de l'invention permettent de bonnes performances sur les aspects essentiels que sont l'adhérence, la résistance au roulement et le comportement routier. On note également que l'élastomère greffé PMMA ne permet pas un aussi bon compromis que l'invention, notamment entre l'adhérence et l'hystérèse de la composition.

## Revendications

1. Pneumatique muni d'une bande de roulement comprenant une composition de caoutchouc à base d'au moins un élastomère diénique, une charge renforçante, un système de réticulation et une résine thermoplastique de polyméthacrylate de méthyle, ladite résine thermoplastique de polyméthacrylate de méthyle présentant un point de ramollissement Vicat mesuré selon la norme ISO 306 : 2013 B50 compris dans un domaine allant de 60°C à 100°C.

2. Pneumatique selon la revendication 1, dans lequel ledit élastomère diénique est choisi dans le groupe constitué par les polybutadiènes, les polyisoprènes de synthèse, le caoutchouc naturel, les copolymères de butadiène, les copolymères d'isoprène et les mélanges de ces élastomères.

3. Pneumatique selon l'une quelconque des revendications précédentes dans lequel ledit élastomère diénique est choisi dans le groupe constitué par les polybutadiènes, les copolymères de butadiène et de styrène, le caoutchouc naturel et les mélanges de ces élastomères.

4. Pneumatique selon l'une quelconque des revendications précédentes dans lequel la charge renforçante est choisie dans le groupe constitué par les silices, les noirs de carbone et les mélanges de ces derniers.

5. Pneumatique selon l'une quelconque des revendications précédentes dans lequel le taux de charge renforçante est compris dans un domaine allant de 10 à 200 pce, de préférence de 10 à 150 pce.

6. Pneumatique selon l'une quelconque des revendications précédentes dans lequel la charge renforçante majoritaire est du noir de carbone.

7. Pneumatique selon l'une quelconque des revendications précédentes dans lequel le taux de noir de carbone est compris dans un domaine allant de 10 à 90 pce, de préférence de 10 à 70 pce.

8. Pneumatique selon l'une quelconque des revendications 1 à 5 dans lequel la charge renforçante majoritaire est de la silice.

9. Pneumatique selon la revendication 8 dans lequel le taux de silice est compris dans un domaine allant de 50 à 140 pce, de préférence de 70 à 120 pce.

10. Pneumatique selon l'une quelconque des revendications précédentes dans lequel le taux de résine thermoplastique de polyméthacrylate de méthyle est compris dans un domaine allant de 1 à 40 pce, de préférence de 2 à 35 pce.

11. Pneumatique selon l'une quelconque des revendications précédentes dans lequel le point de ramollissement Vicat de la résine thermoplastique de polyméthacrylate de méthyle est compris dans un domaine allant de 65°C à 95°C, de préférence de 70°C à 90°C.

12. Pneumatique selon l'une quelconque des revendications précédentes dans lequel la composition de bande de roulement comprend en outre un plastifiant.

13. Pneumatique selon la revendication précédente dans lequel le plastifiant est choisi parmi les huiles, les résines hydrocarbonées et les mélanges de ces dernières.

14. Pneumatique selon l'une quelconque des revendications 12 ou 13 dans lequel le taux de plastifiant est compris dans un domaine allant de 2 à 80 pce, de préférence de 5 à 60 pce.

15. Pneumatique selon l'une quelconque des revendications 1 à 11 dans lequel la composition de bande de roulement ne comprend pas d'autre agent plastifiant que la résine de polyméthacrylate de méthyle.

## Patentansprüche

1. Reifen mit einer Lauffläche, die eine Kautschukzusammensetzung auf Basis von mindestens einem Dienelastomer, einem verstärkenden Füllstoff, einem Vernetzungssystem und einem thermoplastischen Polymethylmethacrylat-Harz umfasst, wobei das thermoplastische Polymethylmethacrylat-Harz einen gemäß ISO-Norm 306 : 2013 B50 gemessenen Vicat-Erweichungspunkt in einem Bereich von 60 °C bis 100 °C aufweist.

2. Reifen nach Anspruch 1, wobei das Dienelastomer aus der Gruppe bestehend aus Polybutadienen, synthetischen Polyisoprenen, Naturkautschuk, Butadien-Copolymeren, Isopren-Copolymeren und Mischungen dieser Elastomere ausgewählt ist.

3. Reifen nach einem der vorhergehenden Ansprüche, wobei das Dienelastomer aus der Gruppe bestehend aus Polybutadienen, Copolymeren von Butadien und Styrol, Naturkautschuk und Mischungen dieser Elastomere ausgewählt ist.

4. Reifen nach einem der vorhergehenden Ansprüche, wobei der verstärkende Füllstoff aus der Gruppe bestehend aus Kieselsäuren, Rußen und Mischungen davon ausgewählt ist.

5. Reifen nach einem der vorhergehenden Ansprüche, wobei der Gehalt an verstärkendem Füllstoff in einem Bereich von 10 bis 200 phe, vorzugsweise von 10 bis 150 phe, liegt.

6. Reifen nach einem der vorhergehenden Ansprüche, wobei es sich bei dem hauptsächlichen verstärkenden Füllstoff um Ruß handelt.

7. Reifen nach einem der vorhergehenden Ansprüche, wobei der Gehalt an Ruß in einem Bereich von 10 bis 90 phe, vorzugsweise von 10 bis 70 phe, liegt.

8. Reifen nach einem der Ansprüche 1 bis 5, wobei es sich bei dem hauptsächlichen verstärkenden Füllstoff um Kieselsäure handelt.

9. Reifen nach Anspruch 8, wobei der Gehalt an Kieselsäure in einem Bereich von 50 bis 140 phe, vorzugsweise von 70 bis 120 phe, liegt.

10. Reifen nach einem der vorhergehenden Ansprüche, wobei der Gehalt an thermoplastischem Polymethylmethacrylat-Harz in einem Bereich von 1 bis 40 phe, vorzugsweise von 2 bis 35 phe, liegt.

11. Reifen nach einem der vorhergehenden Ansprüche, wobei der Vicat-Erweichungspunkt des thermoplastischen Polymethylmethacrylat-Harzes in einem Bereich von 65 °C bis 95 °C, vorzugsweise von 70 °C bis 90 °C, liegt.

12. Reifen nach einem der vorhergehenden Ansprüche, wobei die Laufflächenzusammensetzung außerdem einen Weichmacher umfasst.

13. Reifen nach dem vorhergehenden Anspruch, wobei der Weichmacher aus Ölen, Kohlenwasserstoffharzen und Mischungen davon ausgewählt ist.

14. Reifen nach Anspruch 12 oder 13, wobei der Gehalt an Weichmacher in einem Bereich von 2 bis 80 phe, vorzugsweise von 5 bis 60 phe, liegt.

15. Reifen nach einem der Ansprüche 1 bis 11, wobei die Laufflächenusammensetzung keinen anderen Weichmacher als das Polymethylmethacrylat-Harz umfasst.

## Claims

1. Tyre provided with a tread comprising a rubber composition based on at least one diene elastomer, a reinforcing filler, a crosslinking system and a polymethyl methacrylate thermoplastic resin, the polymethyl methacrylate thermoplastic resin exhibiting a Vicat softening point, measured according to Standard ISO 306: 2013 B50, within a range extending from 60°C to 100°C.

2. Tyre according to Claim 1, wherein the diene elastomer is selected from the group consisting of polybutadienes, synthetic polyisoprenes, natural rubber, butadiene copolymers, isoprene copolymers and the mixtures of these elastomers.

3. Tyre according to any one of the preceding claims, wherein the diene elastomer is selected from the group consisting of polybutadienes, copolymers of butadiene and styrene, natural rubber and the mixtures of these elastomers.

4. Tyre according to any one of the preceding claims, wherein the reinforcing filler is selected from the group consisting of silicas, carbon blacks and the mixtures thereof.

5. Tyre according to any one of the preceding claims, wherein the content of reinforcing filler is within a range extending from 10 to 200 phr and preferably from 10 to 150 phr.

6. Tyre according to any one of the preceding claims, wherein the predominant reinforcing filler is carbon black.

7. Tyre according to any one of the preceding claims, wherein the content of carbon black is within a range extending from 10 to 90 phr and preferably from 10 to 70 phr.

8. Tyre according to any one of Claims 1 to 5, wherein the predominant reinforcing filler is silica.

9. Tyre according to Claim 8, wherein the content of silica is within a range extending from 50 to 140 phr and preferably from 70 to 120 phr.

10. Tyre according to any one of the preceding claims, wherein the content of polymethyl methacrylate thermoplastic resin is within a range extending from 1 to 40 phr and preferably from 2 to 35 phr.

11. Tyre according to any one of the preceding claims, wherein the Vicat softening point of the polymethyl methacrylate thermoplastic resin is within a range extending from 65°C to 95°C and preferably from 70°C to 90°C.

12. Tyre according to any one of the preceding claims, wherein the tread composition additionally comprises a plasticizer.

13. Tyre according to the preceding claim, wherein the plasticizer is chosen from oils, hydrocarbon resins and the mixtures thereof.

14. Tyre according to either one of Claims 12 and 13, wherein the content of plasticizer is within a range extending from 2 to 80 phr and preferably from 5 to 60 phr.

15. Tyre according to any one of Claims 1 to 11, wherein the tread composition does not comprise another plasticizing agent than the polymethyl methacrylate resin.
